# EUROPÄISCHE PATENTSCHRIFT

(11) **EP 3 655 678 B1**
(45) Veröffentlichungstag und Bekanntmachung des Hinweises auf die Patenterteilung: **08.09.2021**
(21) Anmeldenummer: 18742999.8
(22) Anmeldetag: 16.07.2018
(51) Int. Cl.: F16F 7/108, B23B 29/02

(54) **DÄMPFUNGSVORRICHTUNG UND WERKZEUGHALTEVORRICHTUNG MIT EINER SOLCHEN DÄMPFUNGSVORRICHTUNG**
DAMPING DEVICE AND TOOL-HOLDING DEVICE HAVING SUCH A DAMPING DEVICE
DISPOSITIF D'AMORTISSEMENT ET DISPOSITIF DE SUPPORT D'OUTIL COMPRENANT UN TEL DISPOSITIF D'AMORTISSEMENT

(30) Priorität: 19.07.2017 DE 102017116326
(43) Veröffentlichungstag der Anmeldung: 27.05.2020
(73) Patentinhaber: Wohlhaupter GmbH, 72636 Frickenhausen (DE)
(72) Erfinder: BUCK, Günter, 72584 Hülben (DE)
(74) Vertreter: Hoeger, Stellrecht & Partner Patentanwälte mbB
(86) Internationale Anmeldenummer: PCT/EP2018/069312
(87) Internationale Veröffentlichungsnummer: WO 2019/016161

(56) Entgegenhaltungen:
- DE-A1- 2 933 726
- JP-A- H0 631 509
- US-A- 3 774 730
- US-B2- 7 661 912

## Beschreibung

Die Erfindung betrifft eine Dämpfungsvorrichtung gemäß dem Oberbegriff des Anspruchs 1 zur passiven Dämpfung von Vibrationen einer Werkzeughaltevorrichtung während der spanenden Bearbeitung eines Werkstücks, wobei die Dämpfungsvorrichtung einen Dämpfungskörper aufweist mit einem ersten Ende und einem zweiten Ende, und wobei an den beiden Enden jeweils eine Dämpfungseinrichtung angeordnet ist, die einen starr mit dem Dämpfungskörper verbundenen Lagerzapfen und eine den Lagerzapfen in Umfangsrichtung umgebende Lagerbuchse aufweist, wobei zwischen dem Lagerzapfen und der Lagerbuchse ein mit einem Dämpfungsfluid gefüllter Ringraum angeordnet ist, der bezogen auf eine Längsachse der Dämpfungsvorrichtung von zwei in einem axialen Abstand zueinander angeordneten, elastisch verformbaren Dichtringen abgedichtet ist.

Zur spanenden Bearbeitung von Werkstücken, insbesondere Werkstücken aus Metall, kommen Werkzeughaltevorrichtungen zum Einsatz, die direkt oder unter Einsatz eines separaten Schnittstellenteils mit einer Maschinenspindel einer Werkzeugmaschine gekoppelt werden können und die ein Werkzeug zur spanenden Bearbeitung des Werkstückes tragen können, beispielsweise ein Dreh-, Bohr- oder Fräswerkzeug. Derartige Werkzeughaltevorrichtungen können insbesondere in Form von Bohrstangen ausgestaltet sein. Die Werkzeughaltevorrichtungen können eine Länge aufweisen, die ein Mehrfaches ihres Durchmessers beträgt. Dies führt zu einer Verringerung der Steifigkeit der Werkzeughaltevorrichtungen und kann zur Folge haben, dass die Werkzeughaltevorrichtungen während der spanenden Bearbeitung eines Werkstückes zu Vibrationen angeregt werden. Die Vibrationen können sich auf das an den Werkzeughaltevorrichtungen angeordnete Werkzeug übertragen und die Bearbeitungsqualität beeinträchtigen. Beispielsweise können die Vibrationen die Oberflächengüte des Werkstücks verschlechtern und auch zu nicht maßhaltigen Werkstücken führen. Darüber hinaus kann durch derartige Vibrationen das Werkzeug beschädigt werden.

Um derartigen Vibrationen entgegenzuwirken, sind Dämpfungsvorrichtungen zur passiven Dämpfung der Vibrationen bekannt, die in eine Werkzeughaltevorrichtung integriert werden können. Die Werkzeughaltevorrichtung kann hierzu einen Hohlraum aufweisen, in dem eine Dämpfungsvorrichtung angeordnet werden kann. In der US 3,774,730 A wird hierzu eine Dämpfungsvorrichtung vorgeschlagen mit einem zylindrischen Dämpfungskörper, dessen Enden konisch ausgestaltet sind und jeweils eine in Umfangsrichtung umlaufende Ringnut aufweisen, in der ein O-Ring angeordnet ist. Die Lagerung des Dämpfungskörpers erfolgt über die elastisch ausgestalteten O-Ringe, die mit ihrer dem Dämpfungskörper abgewandten Außenseite jeweils an einer Druckplatte der Dämpfungsvorrichtung anliegen. Eine der beiden Druckplatten ist in axialer Richtung beweglich gelagert und kann mittels einer Stellschraube relativ zum Dämpfungskörper verschoben werden, um dadurch die auf die O-Ringe einwirkende Vorspannung zu verändern. Dies hat eine Veränderung der Dämpfungseigenschaften der Dämpfungsvorrichtung zur Folge. Eine optimale Einstellung der Vorspannung kann eine wirkungsvolle Vibrationsdämpfung ermöglichen. Allerdings gestaltet sich das Einstellen der Vorspannung für den Benutzer häufig schwierig und birgt die Gefahr einer Fehleinstellung.

In der US 7,661,912 B2 wird zur passiven Dämpfung von Vibrationen einer Werkzeughaltevorrichtung eine Dämpfungsvorrichtung mit den Merkmalen des Oberbegriffes des Anspruchs 1 vorgeschlagen, der an seinem ersten Ende und an seinem zweiten Ende jeweils eine Dämpfungseinrichtung trägt. Die Dämpfungseinrichtungen weisen jeweils einen starr mit dem Dämpfungskörper verbundenen Lagerzapfen auf, der in Umfangsrichtung von einer Lagerbuchse umgeben ist. Die Lagerbuchse ist in einem radialen Abstand zum Lagerzapfen angeordnet, so dass sich zwischen dem Lagerzapfen und der Lagerbuchse ein Ringraum ausbildet. Der Ringraum nimmt ein zähflüssiges Dämpfungsfluid auf und ist in axialer Richtung von zwei in einem axialen Abstand zueinander angeordneten Dichtringen abgedichtet. Die Dämpfungscharakteristik der Dämpfungsvorrichtung kann

justiert werden, indem der axiale Abstand zwischen den O-Ringen eingestellt wird. Bei optimaler Justierung kann eine wirksame Vibrationsdämpfung erzielt werden, allerdings besteht auch bei einer derartigen Ausgestaltung der Dämpfungsvorrichtung die Gefahr von Fehleinstellungen.

Aufgabe der vorliegenden Erfindung ist es daher, eine Dämpfungsvorrichtung der eingangs genannten Art derart weiterzubilden, dass eine wirkungsvolle Vibrationsdämpfung ohne manuelle Justierung durch den Benutzer erzielt werden kann.

Diese Aufgabe wird bei einer Dämpfungsvorrichtung der gattungsgemäßen Art erfindungsgemäß dadurch gelöst, dass die beiden Dichtringe jeweils einen ersten Anlagebereich und einen zweiten Anlagebereich sowie einen federnden Zwischenbereich aufweisen, wobei der erste Anlagebereich stoffschlüssig mit dem Lagerzapfen und der zweite Anlagebereich stoffschlüssig mit der Lagerbuchse verbunden ist, und wobei der Zwischenbereich zwischen den beiden Anlagebereichen angeordnet und relativ zum Lagerzapfen und relativ zur Lagerbuchse elastisch verformbar ist.

Bei der erfindungsgemäßen Dämpfungsvorrichtung erfolgt die passive Dämpfung von Vibrationen durch den kombinierten Einsatz elastisch verformbarer Dichtringe und eines Dämpfungsfluids. Die Dichtringe haben eine Doppelfunktion, indem sie zum einen paarweise einen Ringraum abdichten, der ein Dämpfungsfluid aufnimmt, und zum anderen eine Federwirkung ausüben, die die Dämpfungscharakteristik der Dämpfungsvorrichtung beeinflusst. Die stoffschlüssige Verbindung der Dichtringe mit einem Lagerzapfen und einer Lagerbuchse hat den Vorteil, dass der mit dem Dichtungsfluid gefüllte Ringraum zuverlässig abgedichtet werden kann. Auch unter der Wirkung der Vibrationen des Dichtungskörpers besteht praktisch keine Gefahr, dass Dämpfungsfluid aus dem Ringraum austritt.

Darüber hinaus hat die stoffschlüssige Verbindung den Vorteil, dass die Dämpfungscharakteristik der Dämpfungsvorrichtung berechenbar und damit vorhersehbar und reproduzierbar ist, sofern die Dichtringe einen mit dem Lagerzapfen stoffschlüssig verbundenen ersten Anlagebereich, einen mit der Lagerbuchse stoffschlüssig verbundenen zweiten Anlagebereich und einen zwischen den Anlagebereichen angeordneten Zwischenbereich aufweisen. Der erste Anlagebereich ist an der Ringinnenseite der Dichtringe angeordnet, und der zweite Anlagebereich ist an der Ringaußenseite der Dichtringe angeordnet.

Bevorzugt taucht der erste Anlagebereich in eine Aufnahmenut des Lagerzapfens ein.

Bevorzugt taucht der zweite Anlagebereich in eine Aufnahmenut der Lagerbuchse ein.

Aufgrund ihrer stoffschlüssigen Verbindung mit dem Lagerzapfen beziehungsweise mit der Lagerbuchse tragen die beiden Anlagebereiche nur geringfügig zur Federwirkung der Dichtringe bei. Die federnde Wirkung der Dichtringe wird vor allem durch den Zwischenbereich sichergestellt, der in radialer Richtung zwischen den beiden Anlagebereichen und folglich in einem Bereich zwischen der Ringinnenseite und der Ringaußenseite angeordnet ist.

Die Dichtringe können insbesondere derart ausgestaltet sein, dass der Zwischenbereich weder in eine Aufnahmenut des Lagerzapfens noch in eine Aufnahmenut der Lagerbuchse eintaucht.

Der Zwischenbereich ist relativ zum Lagerzapfen und relativ zur Lagerbuchse verformbar und übt eine federnde Wirkung aus, die im Voraus berechnet werden kann und in Kombination mit weiteren, ebenfalls im Voraus berechenbaren und vorgebbaren Einflussgrößen, wie beispielsweise der Masse des Dämpfungskörpers, der Art des zum Einsatz kommenden Dämpfungsfluids und der Länge und Breite des Ringraums, die Dämpfungscharakteristik der Dämpfungsvorrichtung bestimmt. Die Dämpfungscharakteristik der erfindungsgemäßen Dämpfungsvorrichtung kann somit im Herstellerwerk der Dämpfungsvorrichtung vorgegeben werden und eine manuelle Justierung jeder einzelnen Dämpfungsvorrichtung durch den Benutzer ist nicht erforderlich. Die Dämpfungsvorrichtung kann in großer Stückzahl mit praktisch gleichbleibenden Dämpfungseigenschaften hergestellt werden.

Die stoffschlüssige Verbindung zwischen den Anlagebereichen der Dichtringe und dem Lagerzapfen bzw. der Lagerbuchse der Dämpfungseinrichtungen kann beispielsweise in Form einer Klebeverbindung ausgestaltet sein, indem der erste Anlagebereich der Dichtringe jeweils mit einem Lagerzapfen verklebt ist und indem der zweite Anlagebereich der Dichtringe jeweils mit einer Lagerbuchse verklebt ist.

Die Anlagebereiche der Dichtringe können im Querschnitt beispielsweise die Form eines Vielecks ausbilden, insbesondere die Form eines Dreiecks oder Vierecks. Die Anlagebereiche der Dichtringe können im Querschnitt zum Beispiel rechteckförmig, quadratisch, trapezförmig oder rautenförmig ausgestaltet sein.

Bei einer bevorzugten Ausgestaltung der Erfindung weisen die beiden Anlagebereiche der Dichtringe im Querschnitt die Form eines Kreisabschnittes auf. Sie bilden also bevorzugt jeweils eine Teilfläche eines Kreises, die von einem Kreisbogen und einer Kreissehne begrenzt wird. Entlang des Kreisbogens können die Dichtringe mit dem Lagerzapfen bzw. der Lagerbuchse stoffschlüssig verbunden sein. Insbesondere kann sich entlang des Kreisbogens eine Anlagefläche erstrecken, mit der die Dichtringe am Lagerzapfen bzw. an der Lagerbuchse flächig anliegen. An die Kreissehne kann sich der Zwischenbereich der Dichtringe anschließen.

Besonders vorteilhaft ist es, wenn sich der Kreisbogen der Anlagebereiche über einen Winkelbereich von mindestens 120° erstreckt, vorzugsweise über einen Winkelbereich von 150° bis 180°. Bei einem Winkelbereich von 180° sind die Anlagebereiche der Dichtringe im Querschnitt halbkreisförmig ausgestaltet.

Von Vorteil ist es, wenn die beiden Anlagebereiche der Dichtringe identisch ausgestaltet sind.

Bevorzugt werden die Anlagebereiche jeweils von einer Ringnut eines Lagerzapfens beziehungsweise einer Lagerbuchse aufgenommen. Die Ringnut kann im Querschnitt beispielsweise U-förmig oder C-förmig ausgestaltet sein.

Günstig ist es, wenn die Anlagebereiche an der Wand der jeweiligen Ringnut flächig anliegen. Die Querschnittsfläche der Ringnut entspricht vorteilhafterweise der Querschnittsfläche des in die Ringnut eintauchenden Anlagebereiches.

Der zwischen den beiden Anlagebereichen angeordnete federnde Zwischenbereich weist eine vorgebbare Querschnittsgeometrie auf, die eine Berechnung der Dämpfungseigenschaften der Dämpfungsvorrichtung vereinfacht. Es kann beispielsweise vorgesehen sein, dass der federnde Zwischenbereich im Querschnitt trapezförmig oder tonnenförmig ausgebildet ist.

Bei einer besonders bevorzugten Ausgestaltung der Erfindung ist der federnde Zwischenbereich im Querschnitt rechteckförmig oder quadratisch ausgestaltet.

Wie bereits erwähnt, weisen die jeweils an einem Ende des Dämpfungskörpers angeordneten Dämpfungseinrichtungen einen starr mit dem Dämpfungskörper verbundenen Lagerzapfen auf.

Der Lagerzapfen kann einstückig mit dem Dämpfungskörper verbunden sein, also zusammen mit dem Dämpfungskörper ein einteiliges Bauteil ausbilden, das aus einem einheitlichen Material besteht.

Alternativ kann der Lagerzapfen ein separates Bauteil ausbilden, das mit dem Dämpfungskörper mechanisch verbunden ist. Insbesondere kann der Lagerzapfen mit dem Dämpfungskörper verschraubt sein.

Der Lagerzapfen kann aus einem kostengünstigeren Material bestehen als der Dämpfungskörper.

Beispielsweise kann der Lagerzapfen aus Stahl bestehen.

Während einer spanenden Bearbeitung eines Werkstücks führt der Dämpfungskörper bezogen auf die Längsachse der Dämpfungsvorrichtung sowohl in axialer Richtung als auch in radialer Richtung Vibrationen aus. Die Vibrationen werden vom Dämpfungskörper auf den starr mit dem Dämpfungskörper verbundenen Lagerzapfen übertragen. Vom Lagerzapfen können die Vibrationen über die Dichtringe und das Dämpfungsfluid auf die Lagerbuchse übertragen werden, wobei die Vibrationen einer Dämpfung unterliegen.

Bei der Übertragung axial ausgerichteter Vibrationen unterliegen die Dichtringe einer Scherbelastung, die von der Amplitude der axialen Vibrationen abhängig ist. Um die Scherbelastung zu begrenzen, ist es von Vorteil, wenn die Lagerbuchsen in axialer Richtung in einem Abstand zum Dämpfungskörper angeordnet sind, der mindestens 0,3 mm und maximal 1 mm beträgt.

Insbesondere kann vorgesehen sein, dass der axiale Abstand zwischen den Lagerbuchsen und dem Dämpfungskörper 0,3 mm bis 0,8 mm, beispielsweise 0,5 mm bis 0,6 mm beträgt.

Die Bereitstellung eines in axialer Richtung begrenzten Abstandes zwischen dem Dämpfungskörper und den Lagerbuchsen stellt sicher, dass die in einem Hohlraum einer Werkzeughaltevorrichtung festlegbaren Lagerbuchsen einen Anschlag ausbilden, an dem der Dämpfungskörper anschlägt, wenn die axialen Vibrationen eine sehr große Amplitude aufweisen. Die Scherbelastung der elastisch verformbaren Dichtringe wird dadurch begrenzt.

Ein Mindestabstand von 0,3 mm zwischen dem Dämpfungskörper und den Lagerbuchsen hat sich als vorteilhaft erwiesen, um mittels der Dämpfungsvorrichtung auch axiale Vibrationen wirkungsvoll zu dämpfen.

Die jeweils einen Ringraum in axialer Richtung begrenzenden Dichtringe bestehen bevorzugt aus einem elastisch verformbaren Material, insbesondere aus einem Elastomermaterial.

Von Vorteil ist es, wenn die Dichtringe aus einem Silikonmaterial bestehen. Silikonmaterial weist eine beachtliche Temperaturbeständigkeit auf, so dass die Dichtringe der Temperaturbelastung zuverlässig standhalten, die durch die Vibrationen des Dichtungskörpers hervorgerufen wird.

Das Dämpfungsfluid ist bevorzugt ein Silikonöl.

Der Dämpfungskörper besteht vorzugsweise aus einem Schwermetall, insbesondere aus einem Schwermetall in Form eines Verbundwerkstoffes.

Bevorzugt weist der Dämpfungskörper einen Wolframgehalt von mindestens 90% auf.

Die Dichte des Dämpfungskörpers beträgt vorteilhafterweise mindestens 17 g/cm³.

Es kann vorgesehen sein, dass die beiden Dichtringe jeder Dämpfungseinrichtungen identisch ausgestaltet sind.

Vorteilhafterweise sind die Dämpfungseinrichtungen, die an den beiden Enden des Dämpfungskörpers angeordnet sind, identisch ausgebildet.

Bei einer vorteilhaften Ausgestaltung der Erfindung ist der Dämpfungskörper zylindrisch, insbesondere kreiszylindrisch ausgestaltet.

Die Länge des Dämpfungskörpers, das heißt die axiale Erstreckung des Dämpfungskörpers, ist bevorzugt größer als der Durchmesser des Dämpfungskörpers.

Von besonderem Vorteil ist es, wenn die an den beiden Enden des Dämpfungskörpers angeordneten Dämpfungseinrichtungen mit dem Dämpfungskörper lösbar verbindbar sind.

Insbesondere kann vorgesehen sein, dass die Dämpfungseinrichtungen mit dem Dämpfungskörper verschraubbar sind.

Von Vorteil ist es, wenn die an den beiden Enden des Dämpfungskörpers angeordneten Lagerzapfen als Hohlzapfen ausgestaltet sind.

Die Ausgestaltung der Lagerzapfen in Form von Hohlzapfen ermöglicht es, jeweils eine Verbindungsschraube durch die Lagerzapfen hindurchzuführen, um mit Hilfe der Verbindungsschraube den Lagerzapfen mit dem Dämpfungskörper starr zu verbinden.

Von besonderem Vorteil ist es, wenn die an den Enden des Dämpfungskörpers angeordneten Dämpfungseinrichtungen jeweils ein auswechselbares Dämpfungsmodul ausbilden.

Vorzugsweise sind die an den Enden des Dämpfungskörpers angeordneten Dämpfungsmodule identisch ausgestaltet. Dies erlaubt es, die Dämpfungsmodule mit höherer Stückzahl zu fertigen und dadurch die Herstellungskosten zu reduzieren.

Die Erfindung betrifft auch eine Werkzeughaltevorrichtung mit einem Haltekörper und mit einer Dämpfungsvorrichtung der voranstehend erläuterten Art. Der Haltekörper weist einen zentralen Hohlraum auf, der sich von einem Hohlraumboden bis zu einer Stirnseite des Haltekörpers erstreckt und in dem die Dämpfungsvorrichtung angeordnet ist, wobei die Lagerbuchsen der Dämpfungsvorrichtung am Haltekörper festgelegt sind. Wie bereits erwähnt, kann durch den Einsatz der im Hohlraum des Haltekörpers angeordneten Dämpfungsvorrichtung eine wirkungsvolle Dämpfung von Vibrationen erzielt werden, die während des Einsatzes der Werkzeughaltevorrichtung aufgrund einer spanenden Bearbeitung eines Werkstücks auftreten.

Von Vorteil ist, wenn die Lagerbuchsen der Dämpfungsvorrichtung jeweils mit Hilfe von mindestens einem Formschlusselement mit dem Haltekörper verbunden sind. Als Formschlusselement kann beispielsweise ein Stift oder eine Schraube zum Einsatz kommen, insbesondere ein Zylinder- oder Kegelstift, beispielsweise ein Kegelgewindestift.

Bei einer vorteilhaften Ausgestaltung der erfindungsgemäßen Werkzeughaltevorrichtung schließt sich innerhalb des Hohlraums des Haltekörpers in Richtung auf dessen Stirnseite ein Werkzeugaufnahmeteil an die Dämpfungsvorrichtung an, wobei sich das Werkzeugaufnahmeteil zumindest bis zur Stirnseite des Haltekörpers erstreckt und ausgestaltet ist zur lösbaren Verbindung mit einem Werkzeug zur spanenden Bearbeitung eines Werkstücks. Mit Hilfe des Werkzeugaufnahmeteils kann an der Stirnseite des Haltekörpers ein Werkzeug festgelegt werden, das für eine spanende Bearbeitung eines Werkstücks zum Einsatz kommt, beispielsweise ein Bohrwerkzeug. Es kann auch vorgesehen sein, dass der Haltekörper eine sich an die Dämpfungsvorrichtung anschließende Aufnahme aufweist zur direkten lösbaren Verbindung mit dem Werkzeug. Die Dämpfungsvorrichtung ist bei derartigen Ausgestaltungen in geringem Abstand zu dem Werkzeug angeordnet. Aufgrund des geringen Abstandes können während der spanenden Bearbeitung des Werkstücks auftretende Vibrationen besonders wirkungsvoll gedämpft werden.

An seiner der Stirnseite abgewandten Rückseite weist der Haltekörper bei einer vorteilhaften Ausgestaltung der Erfindung ein Verbindungselement auf, das ausgestaltet ist zur lösbaren Verbindung mit einem Schnittstellenteil zum Verbinden der Werkzeughaltevorrichtung mit der Maschinenspindel einer Werkzeugmaschine.

Es kann auch vorgesehen sein, dass die Werkzeughaltevorrichtung direkt mit einer Maschinenspindel verbindbar ist. Zur Verbindung kann die Werkzeughaltevorrichtung beispielsweise einen Steilkegel oder Hohlschaftkegel aufweisen, der an der der Stirnseite abgewandten Rückseite des Haltekörpers angeordnet ist.

Bevorzugt bildet die Werkzeughaltevorrichtung zusammen mit dem Schnittstellenteil, dem Werkzeugaufnahmeteil und dem Werkzeug ein modulares Werkzeugsystem. Das Schnittstellenteil kann ein erstes Modul des Werkzeugsystems darstellen, das eine Verbindung des Werkzeugsystems mit der Maschinenspindel einer Werkzeugmaschine ermöglicht. An das erste Modul kann sich die Werkzeughaltevorrichtung in Form eines zweiten Moduls anschließen, in das eine Dämpfungsvorrichtung der voranstehend genannten Art integriert ist und das stirnseitig ein Werkzeugaufnahmeteil trägt. An das zweite Modul kann sich ein drittes Modul anschließen in Form eines Werkzeugs, beispielsweise eines Fräswerkzeugs oder Bohrwerkzeugs, das zur spanenden Bearbeitung eines Werkstücks zum Einsatz kommt.

Die nachfolgende Beschreibung einer vorteilhaften Ausführungsform der Erfindung dient im Zusammenhang mit der Zeichnung der näheren Erläuterung. Es zeigen:

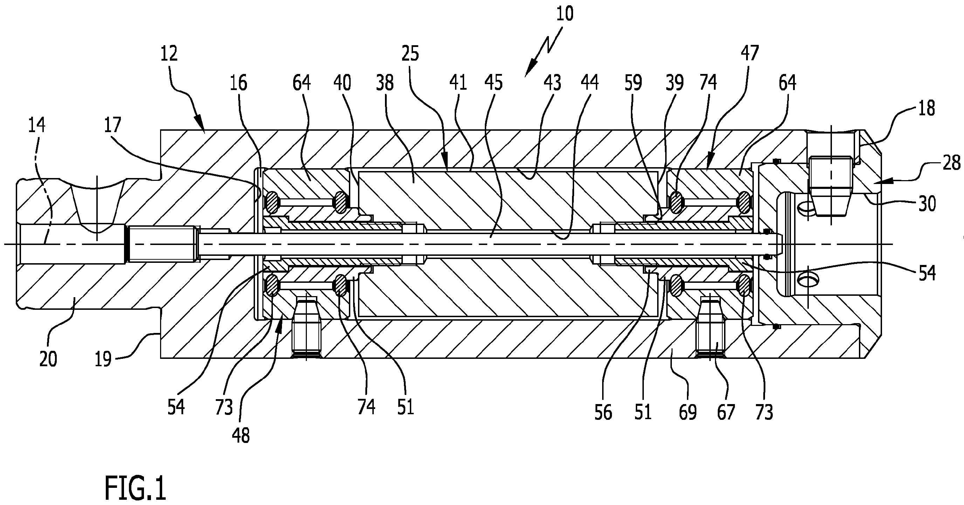

- Figur 1:: eine Schnittansicht einer Werkzeughaltevorrichtung mit integrierter Dämpfungsvorrichtung, wobei die Dämpfungsvorrichtung zwei identisch ausgestaltete Dämpfungseinrichtungen aufweist, zwischen denen ein Dämpfungskörper angeordnet ist;
- Figur 2:: eine Schnittansicht einer Dämpfungseinrichtung der Dämpfungsvorrichtung aus Figur 1;
- Figur 3:: eine Schnittansicht eines Dichtringes der Dämpfungseinrichtung aus Figur 2;
- Figur 4:: eine Seitenansicht eines modularen Werkzeugsystems mit einer Werkzeughaltevorrichtung aus Figur 1.

In der Zeichnung ist eine vorteilhafte Ausführungsform einer erfindungsgemäßen Werkzeughaltevorrichtung schematisch dargestellt, die insgesamt mit dem Bezugszeichen 10 belegt ist. In die Werkzeughaltevorrichtung ist eine vorteilhafte Ausführungsform einer ebenfalls schematisch dargestellten erfindungsgemäßen Dämpfungsvorrichtung 25 integriert.

Die Werkzeughaltevorrichtung weist einen länglichen, im dargestellten Ausführungsbeispiel kreiszylindrischen Haltekörper 12 auf, der einen koaxial zu einer Längsachse 14 der Werkzeughaltevorrichtung 10 ausgerichteten zylindrischen Hohlraum 16 aufweist. Der Hohlraum 16 erstreckt sich von einem Hohlraumboden 17 bis zu einer Stirnseite 18 des Haltekörpers 12.

An seiner der Stirnseite 18 abgewandten Rückseite 19 bildet der Haltekörper 12 ein Verbindungselement aus, das im dargestellten Ausführungsbeispiel als Verbindungszapfen 20 ausgestaltet ist.

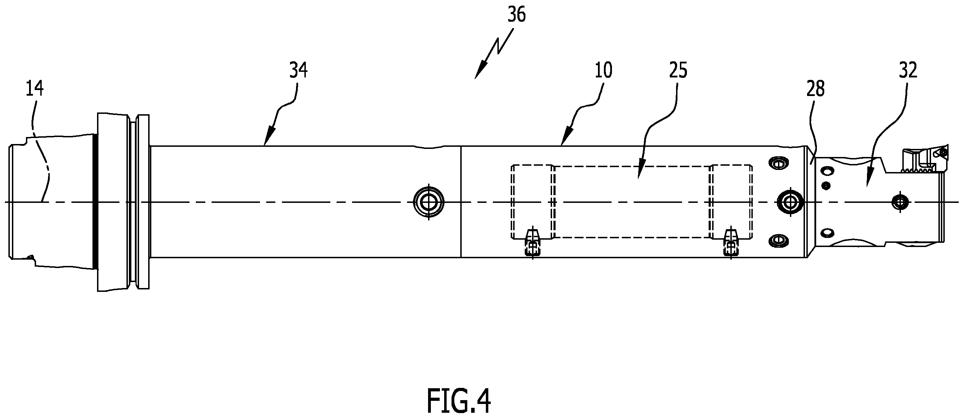

Im Hohlraum 16 ist die Dämpfungsvorrichtung 25 angeordnet. An die dem Hohlraumboden 17 abgewandte Seite der Dämpfungsvorrichtung 25 schließt sich innerhalb des Hohlraums 16 ein Werkzeugaufnahmeteil 28 an. Das Werkzeugaufnahmeteil 28 weist eine koaxial zur Längsachse 14 ausgerichtete Ausnehmung 30 auf. Das Werkzeugaufnahmeteil 28 erlaubt es, die Werkzeughaltevorrichtung 10 mit einem in Figur 4 schematisch dargestellten Werkzeug 32 zu verbinden, und der Verbindungszapfen 20 erlaubt es, die Werkzeughaltevorrichtung 10 mit einem in Figur 4 schematisch dargestellten Schnittstellenteil 34 zu verbinden, mit dessen Hilfe die Werkzeughaltevorrichtung 10 mit der Maschinenspindel einer Werkzeugmaschine verbunden werden kann. Die Werkzeughaltevorrichtung 10 bildet in Kombination mit dem Werkzeugaufnahmeteil 28, dem Werkzeug 32 und dem Schnittstellenteil 34 ein modulares Werkzeugsystem 36, das um die Längsachse14 in Drehung versetzt werden kann zur spanenden Bearbeitung eines Werkstücks.

Um während der spanenden Bearbeitung auftretende Vibrationen zu dämpfen, ist die Dämpfungsvorrichtung 25 in die Werkzeughaltevorrichtung 10 integriert. Die Dämpfungsvorrichtung 25 weist einen länglichen Dämpfungskörper 38 auf, der aus einem Schwermetall-Verbundwerkstoff besteht. Im dargestellten Ausführungsbeispiel besteht der Dämpfungskörper 38 aus einem Verbundwerkstoff mit einem Wolframgehalt von mindestens 90%. Die Dichte des Dämpfungskörpers 38 beträgt im dargestellten Ausführungsbeispiel mindestens 17 g/cm³.

Der Dämpfungskörper 38 ist im dargestellten Ausführungsbeispiel kreiszylindrisch ausgestaltet und weist ein erstes Ende 39, ein zweites Ende 40 sowie eine Mantelfläche 41 auf. Im dargestellten Ausführungsbeispiel ist die Länge des Dämpfungskörpers 38, das heißt seine Erstreckung parallel zur Längsachse 14, größer als sein Durchmesser quer zur Längsachse 14. Die Erfindung ist allerdings nicht auf eine derartige Ausgestaltung beschränkt, vielmehr könnte die Länge des Dämpfungskörpers auch kleiner sein als sein Durchmesser. Der Dämpfungskörper 38 ist koaxial zur Längsachse 14 ausgerichtet, wobei die Mantelfläche 41 einen Abstand zu einer Innenwand 43 des Hohlraums 16 einnimmt. Der Abstand beträgt günstigerweise maximal 2 mm, vorzugsweise 0,5 bis 0,8 mm.

Der Dämpfungskörper 38 weist eine zentrale Durchgangsbohrung 44 auf, die von einer Kühlmittelleitung 45 durchgriffen wird. Über die Kühlmittelleitung 45 kann dem mittels des Werkzeugaufnahmeteils 28 an der Stirnseite 18 des Haltekörpers 12 angeordneten Werkzeug 32 während einer spanenden Bearbeitung eines Werkstücks Kühlmittel zugeführt werden.

Die Lagerung des Dämpfungskörpers 38 im Hohlraum 16 erfolgt mittels einer am ersten Ende 39 angeordneten ersten Dämpfungseinrichtung 47 und einer am zweiten Ende 40 angeordneten zweiten Dämpfungseinrichtung 48. Die beiden Dämpfungseinrichtungen 47, 48 sind im dargestellten Ausführungsbeispiel identisch ausgestaltet und bilden jeweils ein auswechselbares Dämpfungsmodul aus, das mit dem Dämpfungskörper 38 lösbar verbindbar, insbesondere verschraubbar ist.

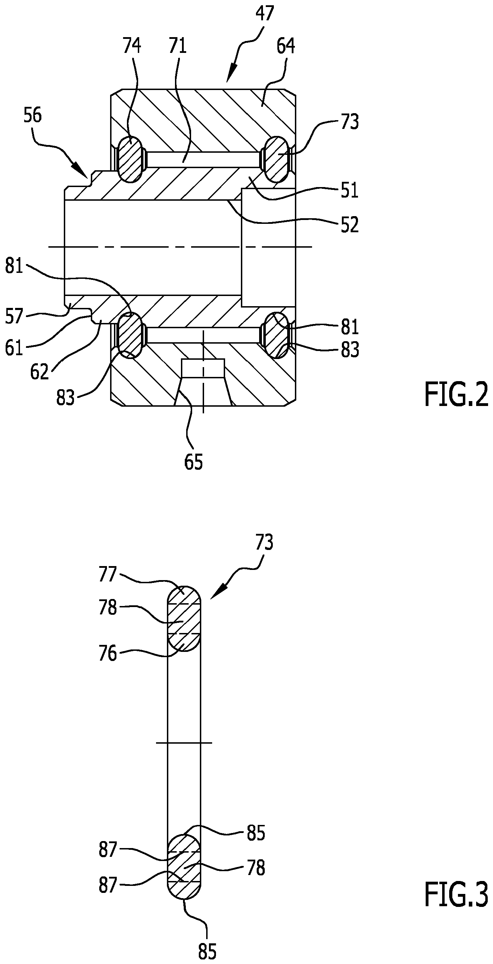

Die erste Dämpfungseinrichtung 47 ist in Figur 2 vergrößert dargestellt und wird nachfolgend näher erläutert, wobei sich diese Erläuterungen in gleicher Weise auch auf die identisch ausgestaltete zweite Dämpfungseinrichtung 48 beziehen.

Die Dämpfungseinrichtung 47 weist einen Lagerzapfen 51 auf in Form eines Hohlzapfens, der eine zentrale Durchgangsöffnung 52 umfasst. Die Durchgangsöffnung 52 wird von einer Hohlschraube 54 durchgriffen, mit deren Hilfe der Lagerzapfen 51 starr und lösbar mit dem Dämpfungskörper 38 verbunden ist.

Der Lagerzapfen 51 weist einen dem Dämpfungskörper 38 zugewandten Kragen 56 auf, der mit einem Endabschnitt 57 in eine stirnseitige Ausnehmung 59 des Dämpfungskörpers 38 eintaucht und an den sich über eine radial nach außen gerichtete Stufe 61 ein verbreiteter Kragenabschnitt 62 anschließt. Mittels der Stufe 61 stützt sich der Lagerzapfen 51 am Dämpfungskörper 38 ab.

Der Lagerzapfen 51 ist in Umfangsrichtung von einer Lagerbuchse 64 umgeben, die hohlzylindrisch ausgestaltet ist und eine seitliche Ausnehmung 65 aufweist. In die seitliche Ausnehmung 65 taucht im montierten Zustand der Dämpfungsvorrichtung 25 ein Formschlusselement ein, das im dargestellten Ausführungsbeispiel als Kegelgewindestift 67 ausgestaltet ist. Der Kegelgewindestift 67 durchgreift eine Seitenwand 69 des Haltekörpers 12, die den Hohlraum 16 in Umfangsrichtung begrenzt. Mit Hilfe des Kegelgewindestifts 67 ist die Lagerbuchse 64 im Hohlraum 16 festgelegt.

Zwischen dem Lagerzapfen 51 und der Lagerbuchse 64 erstreckt sich ein Ringraum 71, der mit einem in der Zeichnung zur Erzielung einer besseren Übersicht nicht dargestellten Dämpfungsfluid gefüllt ist. Im dargestellten Ausführungsbeispiel kommt als Dämpfungsfluid ein Silikonöl zum Einsatz.

In axialer Richtung wird der Ringraum 71 von einem ersten Dichtring 73 und einem zweiten Dichtring 74 begrenzt und abgedichtet. Die beiden Dichtringe 73, 74 stellen sicher, dass das Dichtungsfluid nicht aus dem Ringraum 71 entweichen kann.

Die beiden Dichtringe 73, 74 sind identisch ausgestaltet und jeweils elastisch verformbar. Im dargestellten Ausführungsbeispiel bestehen die beiden Dichtringe 73, 74 aus einem Silikonmaterial.

Wie aus Figur 3 deutlich wird, weisen die beiden Dichtringe 73, 74 jeweils einen ersten Anlagebereich 76, einen zweiten Anlagebereich 77 und einen zwischen dem ersten Anlagebereich 76 und dem zweiten Anlagebereich 77 angeordneten Zwischenbereich 78 auf. Der erste Anlagebereich 76 jedes Dichtrings 73, 74 taucht in eine den Lagerzapfen 51 in Umfangsrichtung umgebende äußere Ringnut 81 ein, die den ersten Anlagebereich 76 im dargestellten Ausführungsbeispiel formschlüssig aufnimmt. Der zweite Anlagebereich 77 jedes Dichtrings 73, 74 taucht in eine innenseitig in die Lagerbuchse 64 eingeformte innere Ringnut 83 ein, die den zweiten Anlagebereich 77 im dargestellten Ausführungsbeispiel formschlüssig aufnimmt. Insgesamt weist der Lagerzapfen 51 zwei in axialem Abstand zueinander angeordnete äußere Ringnuten 81 auf und die Lagerbuchse 64 weist zwei in axialem Abstand zueinander angeordnete innere Ringnuten 83 auf. Die beiden Anlagebereiche 76, 77 sind identisch ausgestaltet und weisen im Querschnitt jeweils die Form eines Kreisabschnitts auf, der von einem Kreisbogen 85 und einer Kreissehne 87 begrenzt wird. Entlang des Kreisbogens 85 erstreckt sich die Anlagefläche, mit der die Dichtringe 73, 77 unter Zwischenlage einer in der Zeichnung nicht dargestellten Klebeschicht am Lagerzapfen 51 bzw. an der Lagerbuchse 61 flächig anliegen, und an die Kreissehne 87 schließt sich der Zwischenbereich 78 an.

Der erste Anlagebereich 76 ist stoffschlüssig mit dem Lagerzapfen 51 verbunden, im dargestellten Ausführungsbeispiel ist der erste Anlagebereich 76 mit dem Lagerzapfen 51 verklebt. In entsprechender Weise ist der zweite Anlagebereich 77 stoffschlüssig mit der Lagerbuchse 64 verbunden, im dargestellten Ausführungsbeispiel ist der zweite Anlagebereich 77 mit der Lagerbuchse 64 verklebt.

Der zwischen den beiden Anlagebereichen 76, 77 angeordnete Zwischenbereich 78 weist im dargestellten Ausführungsbeispiel eine rechteckförmige Querschnittsfläche auf und ist sowohl relativ zum Lagerzapfen 51 als auch relativ zur Lagerbuchse 64 elastisch verformbar. Durch die Bereitstellung des Zwischenbereichs wird sichergestellt, dass die beiden Dichtringe 73, 74 eine federnde Wirkung ausüben trotz der stoffschlüssigen Verbindung der Anlagebereiche 76, 77 mit dem Lagerzapfen 51 bzw. der Lagerbuchse 64.

Wie bereits erwähnt, liegt der Lagerzapfen 51 im Bereich der Stufe 61 des Kragens 56 unmittelbar am Dämpfungskörper 38 an und ist mit dem Dämpfungskörper 38 starr verbunden. Vibrationen des Dämpfungskörpers 38 werden somit unmittelbar auf den Lagerzapfen 51 übertragen.

Im Gegensatz zum Lagerzapfen 51 nimmt die Lagerbuchse 64 in axialer Richtung einen Abstand zum Dämpfungskörper 38 ein, wobei der Abstand maximal 1 mm beträgt. Insbesondere kann vorgesehen sein, dass der Abstand etwa 0,3 mm bis ca. 0,7 mm beträgt, vorzugsweise 0,5 mm.

Schwingungen, zu denen die Werkzeughaltevorrichtung 10 während der spanenden Bearbeitung eines Werkstückes angeregt wird, können mit Hilfe der Dämpfungsvorrichtung 25 wirkungsvoll gedämpft werden. Die Dämpfungswirkung wird unter anderem durch die Masse des Dämpfungskörpers 38, die Länge und Breite des Ringraums 71, die Art des Dämpfungsfluids und die federnde Wirkung der Dichtringe 73, 74 bestimmt. Da die Dichtringe 73, 74 mit dem Lagerzapfen 51 und mit der Lagerbuchse 64 stoffschlüssig verbunden sind, ist die federnde Wirkung der in die Ringnuten 81 bzw. 83 formschlüssig eintauchenden Anlagebereiche 76, 77 in erster Näherung vernachlässigbar gering und die Federwirkung der Dichtringe 73, 74 wird im Wesentlichen durch den jeweiligen Zwischenbereich 78 vorgegeben, der im dargestellten Ausführungsbeispiel eine im unverformten Zustand rechteckförmige Querschnittsfläche aufweist und in seiner elastischen Verformung weder vom Lagerzapfen 51 noch von der Lagerbuchse 64 beeinträchtigt wird. Dies ermöglicht es, die Federwirkung der Dichtringe 73, 74 sowie insgesamt die Dämpfungseigenschaften der Dämpfungsvorrichtung 25 zu berechnen und daher durch Wahl der Masse des Dämpfungskörpers 38, der Art des Dämpfungsfluids sowie der Länge und Breite des Ringraums 71, der mit Dämpfungsfluid gefüllt wird, und durch Wahl der Materialeigenschaften der Dichtringe 73, 74 im Herstellerwerk vorzugeben. Eine manuelle Justierung der Dämpfungsvorrichtung 25 durch den Benutzer ist nicht erforderlich.

Wie bereits erwähnt, bildet die Werkzeughaltevorrichtung 10 mit integrierter Dämpfungsvorrichtung 25 und integriertem Werkzeugaufnahmeteil 28 ein auswechselbares Modul aus, das in Kombination mit dem Werkzeug 32 und dem Schnittstellenteil 34 ein modulares Werkzeugsystem 36 ausbildet. Hierbei können unterschiedliche Schnittstellenteile 34 zum Einsatz kommen, die eine Kopplung mit unterschiedlich ausgestalteten Aufnahmevorrichtungen von Maschinenspindeln ermöglichen. In gleicher Weise können unterschiedlich ausgestaltete Werkzeuge 32 zum Einsatz kommen, um ein Werkstück in unterschiedlicher Weise spanend zu bearbeiten. Während der spanenden Bearbeitung auftretende Vibrationen können mittels der Dämpfungsvorrichtung 25 wirkungsvoll gedämpft werden.

## Patentansprüche

1. Dämpfungsvorrichtung zur Dämpfung von Vibrationen einer Werkzeughaltevorrichtung (10) während der spanenden Bearbeitung eines Werkstücks, wobei die Dämpfungsvorrichtung (25) einen Dämpfungskörper (38) aufweist mit einem ersten Ende (39) und einem zweiten Ende (40), und wobei an den beiden Enden (39, 40) jeweils eine Dämpfungseinrichtung (47, 48) angeordnet ist, die einen starr mit dem Dämpfungskörper (38) verbundenen Lagerzapfen (51) und eine den Lagerzapfen (51) in Umfangsrichtung umgebende Lagerbuchse (64) aufweist, wobei zwischen dem Lagerzapfen (51) und der Lagerbuchse (64) ein mit einem Dämpfungsfluid gefüllter Ringraum (71) angeordnet ist, der bezogen auf eine Längsachse (14) der Dämpfungsvorrichtung (25) von zwei in axialem Abstand zueinander angeordneten, elastisch verformbaren Dichtringen (73, 74) abgedichtet ist, **dadurch gekennzeichnet, dass** die beiden Dichtringe (73, 74) jeweils einen ersten Anlagebereich (76) und einen zweiten Anlagebereich (77) sowie einen federnden Zwischenbereich (78) aufweisen, wobei der erste Anlagebereich (76) stoffschlüssig mit dem Lagerzapfen (51) und der zweite Anlagebereich (77) stoffschlüssig mit der Lagerbuchse (64) verbunden ist, und wobei der federnde Zwischenbereich (78) zwischen den beiden Anlagebereichen (76, 77) angeordnet und relativ zum Lagerzapfen (51) und relativ zur Lagerbuchse (64) elastisch verformbar ist.

2. Dämpfungsvorrichtung nach Anspruch 1, **dadurch gekennzeichnet, dass** der erste Anlagebereich (76) mit dem Lagerzapfen (51) verklebt ist und dass der zweite Anlagebereich (77) mit der Lagerbuchse (64) verklebt ist.

3. Dämpfungsvorrichtung nach Anspruch 1 oder 2, **dadurch gekennzeichnet, dass** die beiden Anlagebereiche (76, 77) im Querschnitt die Form eines Kreisabschnitts aufweisen.

4. Dämpfungsvorrichtung nach einem der voranstehenden Ansprüche, **dadurch gekennzeichnet, dass** die beiden Anlagebereiche (76, 77) im Querschnitt halbkreisförmig ausgestaltet sind.

5. Dämpfungsvorrichtung nach einem der voranstehenden Ansprüche, **dadurch gekennzeichnet, dass** die Anlagebereiche (76, 77) jeweils von einer Ringnut (81, 83) eines Lagerzapfens (51) beziehungsweise einer Lagerbuchse (64) aufgenommen werden.

6. Dämpfungsvorrichtung nach einem der voranstehenden Ansprüche, **dadurch gekennzeichnet, dass** der federnde Zwischenbereich (78) im Querschnitt rechteckförmig oder quadratisch ausgestaltet ist.

7. Dämpfungsvorrichtung nach einem der voranstehenden Ansprüche, **dadurch gekennzeichnet, dass** die Lagerbuchse (64) in einem axialen Abstand zum Dämpfungskörper (38) angeordnet ist, der mindestens 0,3 mm und maximal 1 mm beträgt.

8. Dämpfungsvorrichtung nach einem der voranstehenden Ansprüche, **dadurch gekennzeichnet, dass** die beiden Dichtringe (73, 74) aus einem Silikonmaterial bestehen.

9. Dämpfungsvorrichtung nach einem der voranstehenden Ansprüche, **dadurch gekennzeichnet, dass** das Dämpfungsfluid ein Silikonöl ist.

10. Dämpfungsvorrichtung nach einem der voranstehenden Ansprüche, **dadurch gekennzeichnet, dass** der Dämpfungskörper (38) einen Wolframgehalt von mindestens 90% aufweist.

11. Dämpfungsvorrichtung nach einem der voranstehenden Ansprüche, **dadurch gekennzeichnet, dass** die Dichte des Dämpfungskörpers (38) mindestens 17 g/cm³ beträgt.

12. Dämpfungsvorrichtung nach einem der voranstehenden Ansprüche, **dadurch gekennzeichnet, dass** die beiden Dichtringe (73, 74) jeder Dämpfungseinrichtung (47, 48) identisch ausgestaltet sind.

13. Dämpfungsvorrichtung nach einem der voranstehenden Ansprüche, **dadurch gekennzeichnet, dass** die beiden Dämpfungseinrichtungen (47, 48) identisch ausgestaltet sind.

14. Dämpfungsvorrichtung nach einem der voranstehenden Ansprüche, **dadurch gekennzeichnet, dass** die Dämpfungseinrichtungen (47, 48) mit dem Dämpfungskörper (38) lösbar verbindbar sind.

15. Dämpfungsvorrichtung nach einem der voranstehenden Ansprüche, **dadurch gekennzeichnet, dass** die Dämpfungseinrichtungen (47, 48) jeweils ein austauschbares Dämpfungsmodul ausbilden.

16. Werkzeughaltevorrichtung mit einem Haltekörper (12), der einen zentralen Hohlraum (16) aufweist, wobei sich der Hohlraum (16) von einem Hohlraumboden (17) bis zu einer Stirnseite (18) des Haltekörpers (12) erstreckt, und wobei in dem Hohlraum (16) eine Dämpfungsvorrichtung (25) nach einem der voranstehenden Ansprüche angeordnet ist, wobei die Lagerbuchsen (64) der Dämpfungsvorrichtung (25) am Haltekörper (12) festgelegt sind.

17. Werkzeughaltevorrichtung nach Anspruch 16, **dadurch gekennzeichnet, dass** die Lagerbuchsen (64) jeweils mit Hilfe von mindestens einem Formschlusselement (67) mit dem Haltekörper (12) verbunden sind.

18. Werkzeughaltevorrichtung nach Anspruch 16 oder 17, **dadurch gekennzeichnet, dass** sich innerhalb des Hohlraums (16) an die Dämpfungsvorrichtung (25) in Richtung auf die Stirnseite (18) des Haltekörpers (12) ein Werkzeugaufnahmeteil (28) anschließt, das sich bis zur Stirnseite (18) des Haltekörpers (12) erstreckt und ausgestaltet ist zur lösbaren Verbindung mit einem Werkzeug (32) zur spanenden Bearbeitung eines Werkstücks.

19. Werkzeughaltevorrichtung nach Anspruch 16, 17 oder 18, **dadurch gekennzeichnet, dass** der Haltekörper (12) an seiner der Stirnseite (18) abgewandten Rückseite (19) ein Verbindungselement (20) aufweist, das ausgestaltet ist zur lösbaren Verbindung mit einem Schnittstellenteil (34) zum Verbinden der Werkzeughaltevorrichtung (12) mit der Maschinenspindel einer Werkzeugmaschine.

## Claims

1. Damping apparatus for damping vibrations of a tool-holding apparatus (10) during the machining of a workpiece, wherein the damping apparatus (25) comprises a damping body (38) having a first end (39) and a second end (40), and wherein arranged on the two ends (39, 40) is a respective damping device (47, 48) which comprises a bearing pin (51) that is rigidly connected to the damping body (38) and a bearing bush (64) that surrounds the bearing pin (51) in the circumferential direction, wherein arranged between the bearing pin (51) and the bearing bush (64) is an annular space (71) which is filled with a damping fluid and is sealed by two elastically deformable sealing rings (73, 74) arranged at an axial distance from each other in relation to a longitudinal axis (14) of the damping apparatus (25), **characterized in that** the two sealing rings (73, 74) each comprise a first abutment region (76) and a second abutment region (77) as well as a resilient intermediate region (78), wherein the first abutment region (76) is materially bonded to the bearing pin (51) and the second abutment region (77) is materially bonded to the bearing bush (64), and wherein the resilient intermediate region (78) is arranged between the two abutment regions (76, 77) and is elastically deformable relative to the bearing pin (51) and relative to the bearing bush (64).

2. Damping apparatus in accordance with Claim 1, **characterized in that** the first abutment region (76) is adhesively bonded to the bearing pin (51) and **in that** the second abutment region (77) is adhesively bonded to the bearing bush (64).

3. Damping apparatus in accordance with Claim 1 or 2, **characterized in that** the two abutment regions (76, 77) have the shape of a circular segment in cross section.

4. Damping apparatus in accordance with any one of the preceding Claims, **characterized in that** the two abutment regions (76, 77) are configured to be semicircular in cross section.

5. Damping apparatus in accordance with any one of the preceding Claims, **characterized in that** the abutment regions (76, 77) are each accommodated by an annular groove (81, 83) of a bearing pin (51) and of a bearing bush (64), respectively.

6. Damping apparatus in accordance with any one of the preceding Claims, **characterized in that** the resilient intermediate region (78) is configured to be rectangular or square in cross section.

7. Damping apparatus in accordance with any one of the preceding Claims, **characterized in that** the bearing bush (64) is arranged at an axial distance from the damping body (38) which is at least 0.3 mm and at most 1 mm.

8. Damping apparatus in accordance with any one of the preceding Claims, **characterized in that** the two sealing rings (73, 74) consist of a silicone material.

9. Damping apparatus in accordance with any one of the preceding Claims, **characterized in that** the damping fluid is a silicone oil.

10. Damping apparatus in accordance with any one of the preceding Claims, **characterized in that** the damping body (38) has a tungsten content of at least 90%.

11. Damping apparatus in accordance with any one of the preceding Claims, **characterized in that** the density of the damping body (38) is at least 17 g/cm³.

12. Damping apparatus in accordance with any one of the preceding Claims, **characterized in that** the two sealing rings (73, 74) of each damping device (47, 48) are of identical configuration.

13. Damping apparatus in accordance with any one of the preceding Claims, **characterized in that** the two damping devices (47, 48) are of identical configuration.

14. Damping apparatus in accordance with any one of the preceding Claims, **characterized in that** the damping devices (47, 48) are releasably connectible to the damping body (38).

15. Damping apparatus in accordance with any one of the preceding Claims, **characterized in that** the damping devices (47, 48) each form an interchangeable damping module.

16. Tool-holding apparatus with a holding body (12) which comprises a central cavity (16), wherein the cavity (16) extends from a cavity base (17) to a face side (18) of the holding body (12), and wherein a damping apparatus (25) in accordance with any one of the preceding Claims is arranged in the cavity (16), wherein the bearing bushes (64) of the damping apparatus (25) are fixed on the holding body (12).

17. Tool-holding apparatus in accordance with Claim 16, **characterized in that** the bearing bushes (64) are each connected to the holding body (12) by means of at least one positive-locking element (67).

18. Tool-holding apparatus in accordance with Claim 16 or 17, **characterized in that**, within the cavity (16), the damping apparatus (25) is adjoined in the direction toward the face side (18) of the holding body (12) by a tool-receiving part (28) which extends to the face side (18) of the holding body (12) and is configured to releasably connect to a tool (32) for machining a workpiece.

19. Tool-holding apparatus in accordance with Claim 16, 17, or 18, **characterized in that** the holding body (12) comprises a connecting element (20) on its rear side (19) remote from the face side (18), which connecting element (20) is configured to releasably connect to an interface part (34) for connecting the tool-holding apparatus (12) to the machine spindle of a machine tool.

## Revendications

1. Dispositif d'amortissement pour l'amortissement de vibrations d'un dispositif de support d'outil (10) pendant l'usinage par enlèvement de copeaux d'une pièce, dans lequel le dispositif d'amortissement (25) présente un corps d'amortissement (38) avec une première extrémité (39) et une deuxième extrémité (40), et dans lequel respectivement un système d'amortissement (47, 48) est disposé sur les deux extrémités (39, 40), qui présente un tourillon de montage (51) relié rigidement au corps d'amortissement (38) et un coussinet (64) entourant le tourillon de montage (51) dans la direction périphérique, dans lequel un espace annulaire (71) rempli d'un fluide d'amortissement est disposé entre le tourillon de montage (51) et le coussinet (64), qui est étanchéifié par rapport à un axe longitudinal (14) du dispositif d'amortissement (25) par deux bagues d'étanchéité (73, 74) disposées à distance axiale l'une de l'autre, déformables élastiquement, **caractérisé en ce que** les deux bagues d'étanchéité (73, 74) présentent respectivement une première zone d'appui (76) et une deuxième zone d'appui (77) ainsi qu'une zone intermédiaire élastique (78), dans lequel la première zone d'appui (76) est reliée par liaison de matière au tourillon de montage (51) et la deuxième zone d'appui (77) par liaison de matière au coussinet (64), et dans lequel la zone intermédiaire élastique (78) est disposée entre les deux zones d'appui (76, 77) et est déformable élastiquement par rapport au tourillon de montage (51) et par rapport au coussinet (64) .

2. Dispositif d'amortissement selon la revendication 1, **caractérisé en ce que** la première zone d'appui (76) est collée au tourillon de montage (51) et que la deuxième zone d'appui (77) est collée au coussinet (64) .

3. Dispositif d'amortissement selon la revendication 1 ou 2, **caractérisé en ce que** les deux zones d'appui (76, 77) présentent en section transversale la forme d'un segment de cercle.

4. Dispositif d'amortissement selon l'une quelconque des revendications précédentes, **caractérisé en ce que** les deux zones d'appui (76, 77) sont conçues en forme de demi-cercle en section transversale.

5. Dispositif d'amortissement selon l'une quelconque des revendications précédentes, **caractérisé en ce que** les zones d'appui (76, 77) sont reçues respectivement par une rainure annulaire (81, 83) d'un tourillon de montage (51) ou d'un coussinet (64).

6. Dispositif d'amortissement selon l'une quelconque des revendications précédentes, **caractérisé en ce que** la zone intermédiaire élastique (78) est conçue en forme de rectangle ou de manière carrée en section transversale.

7. Dispositif d'amortissement selon l'une quelconque des revendications précédentes, **caractérisé en ce que** le coussinet (64) est disposé à une distance axiale du corps d'amortissement (38), qui atteint au moins 0,3 mm et au maximum 1 mm.

8. Dispositif d'amortissement selon l'une quelconque des revendications précédentes, **caractérisé en ce que** les deux bagues d'étanchéité (73, 74) sont constituées d'un matériau en silicone.

9. Dispositif d'amortissement selon l'une quelconque des revendications précédentes, **caractérisé en ce que** le fluide d'amortissant est une huile de silicone.

10. Dispositif d'amortissement selon l'une quelconque des revendications précédentes, **caractérisé en ce que** le corps d'amortissement (38) présente une teneur en tungstène d'au moins 90 %.

11. Dispositif d'amortissement selon l'une quelconque des revendications précédentes, **caractérisé en ce que** la densité du corps d'amortissement (38) atteint au moins 17 g/cm³.

12. Dispositif d'amortissement selon l'une quelconque des revendications précédentes, **caractérisé en ce que** les deux bagues d'étanchéité (73, 74) de chaque système d'amortissement (47, 48) sont conçues de manière identique.

13. Dispositif d'amortissement selon l'une quelconque des revendications précédentes, **caractérisé en ce que** les deux systèmes d'amortissement (47, 48) sont conçus de manière identique.

14. Dispositif d'amortissement selon l'une quelconque des revendications précédentes, **caractérisé en ce que** les systèmes d'amortissement (47, 48) peuvent être reliés de manière détachable au corps d'amortissement (38) .

15. Dispositif d'amortissement selon l'une quelconque des revendications précédentes, **caractérisé en ce que** les systèmes d'amortissement (47, 48) réalisent respectivement un module d'amortissement interchangeable.

16. Dispositif de support d'outil avec un corps de support (12), qui présente une cavité centrale (16), dans lequel la cavité (16) s'étend d'un fond de cavité (17) à une face frontale (18) du corps de support (12), et dans lequel un dispositif d'amortissement (25) selon l'une quelconque des revendications précédentes est disposé dans la cavité (16), dans lequel les coussinets (64) du dispositif d'amortissement (25) sont fixés sur le corps de support (12).

17. Dispositif de support d'outil selon la revendication 16, **caractérisé en ce que** les coussinets (64) sont reliés au corps de support (12) respectivement à l'aide d'au moins un élément de complémentarité de formes (67).

18. Dispositif de support d'outil selon la revendication 16 ou 17, **caractérisé en ce qu'**une partie de réception d'outil (28), qui s'étend jusqu'à la face frontale (18) du corps de support (12) et est conçue pour la liaison libérable à un outil (32) pour l'usinage par enlèvement de copeaux d'une pièce, se raccorde à l'intérieur de la cavité (16) au dispositif d'amortissement (25) en direction de la face frontale (18) du corps de support (12).

19. Dispositif de support d'outil selon la revendication 16, 17, ou 18, **caractérisé en ce que** le corps de support (12) présente sur sa face arrière (19) opposée à la face frontale (18) un élément de liaison (20), qui est conçu pour la liaison libérable à une partie d'interface (34) pour la liaison du dispositif de support d'outil (12) à la broche de machine d'une machine-outil.
